# FASCICULE DE BREVET EUROPEEN

(11) **EP 4 659 052 B1**
(45) Date de publication et mention de la délivrance du brevet: **25.11.2026**
(21) Numéro de dépôt: 24702366.6
(22) Date de dépôt: 30.01.2024
(51) Int. Cl.: G01T 1/178, G01T 1/29

(54) **PROCÉDÉ ET ENSEMBLE DE CARACTÉRISATION D'UN ÉCHANTILLON SOLIDE SUSCEPTIBLE DE CONTENIR UN ÉLÉMENT RADIOACTIF SE DÉSINTÉGRANT SUIVANT UNE CHAÎNE DE DÉSINTÉGRATION PAR ÉMISSION DE PARTICULES ALPHA ET/OU BÉTA**
VERFAHREN UND ANORDNUNG ZUR CHARAKTERISIERUNG EINER FESTEN PROBE MIT WAHRSCHEINLICHEM ZERFALL EINES RADIOAKTIVEN ELEMENTS GEMÄSS EINER ZERFALLSKETTE DURCH EMISSION VON ALPHA- UND/ODER BETA-PARTIKELN
METHOD AND ASSEMBLY FOR CHARACTERISING A SOLID SAMPLE LIKELY TO CONTAIN A RADIOACTIVE ELEMENT DISINTEGRATING ACCORDING TO A DISINTEGRATION CHAIN BY EMISSION OF ALPHA AND/OR BETA PARTICLES

(30) Priorité: 31.01.2023 FR 2300887
(43) Date de publication de la demande: 10.12.2025
(73) Titulaire: Orano Mining, 92320 Chatillon (FR); AI4R, 44300 Nantes (FR); Université de Poitiers, 86034 Poitiers Cedex (FR); Centre National de la Recherche Scientifique, 75016 Paris (FR)
(72) Inventeur: DONNARD, Jérôme, 44100 NANTES (FR); SARDINI, Paul, 86210 BONNEUIL-MATOURS (FR); DESCOSTES, Michaël, 75020 PARIS (FR)
(74) Mandataire: Lavoix
(86) Numéro de dépôt international: PCT/EP2024/052254
(87) Numéro de publication internationale: WO 2024/160831

(56) Documents cités:
- US-A- 5 210 419
- SARDINI PAUL ET AL: "Quantitative autoradiography of alpha particle emission in geo-materials using the Beaver(TM) system", NUCLEAR INSTRUMENTS & METHODS IN PHYSICS RESEARCH. SECTION A, vol. 833, 4 July 2016 (2016-07-04), pages 15 - 22, XP029716110, ISSN: 0168-9002, DOI: 10.1016/J.NIMA.2016.07.003
- MORISHITA YUKI ED - GUITERAS LLUÍS FONT ET AL: "Development of an alpha- and beta-imaging detector using a thin-stilbene plate for radon-222 progeny measurements", RADIATION MEASUREMENTS, ELSEVIER, AMSTERDAM, NL, vol. 140, 14 December 2020 (2020-12-14), XP086475017, ISSN: 1350-4487, [retrieved on 20201214], DOI: 10.1016/J.RADMEAS.2020.106511

## Description

L'invention concerne en général un procédé de caractérisation d'un échantillon solide susceptible de contenir un élément radioactif se désintégrant suivant une chaine de désintégration par émission de particules α et/ou β.

L'article de Morishita et al. « Development of an α- and β- imaging detector using a thin-stilbene plate for radon-222 progeny measurements », 2021, Radiation measurements, divulgue un détecteur permettant d'identifier dans un échantillon les zones où sont localisés les descendants du ²²²Rn. Ce détecteur est peu précis quand les isotopes à mesurer sont sous la forme de traces, de telle sorte qu'il n'est pas possible d'établir une cartographie des échantillons à grande échelle et de haute précision. Un procédé est connu de SARDINI PAUL ET AL: "Quantitative autoradiography of alpha particle emission in geo-materials using the Beaver(TM) system",NUCLEAR INSTRUMENTS & METHODS IN PHYSICS RESEARCH. SECTION A, vol. 833 , pages 15-22,ISSN: 0168-9002, DOI: 10.1016/J.NIMA.2016.07.003.

Dans ce contexte, l'invention vise à proposer un procédé de caractérisation qui ne présente pas le désavantage ci-dessus.

À cette fin, l'invention selon la revendication 1, porte sur un procédé de caractérisation d'un échantillon solide susceptible de contenir un élément radioactif se désintégrant suivant une chaine de désintégration par émission de particules α et/ou β, la chaîne de désintégration passant successivement par un premier isotope radioactif puis par un second isotope radioactif, le premier isotope se désintégrant par émission d'une première particule d'un type α ou β avec une première période de demi-vie, le second isotope se désintégrant par émission d'une seconde particule d'un type α ou β avec une seconde période de demi-vie inférieure à la première période de demi-vie, le procédé comprenant les étapes suivantes :
- autoradiographie de l'échantillon solide, avec détection au moyen d'un détecteur des particules α et/ou β émises par l'échantillon solide, et pour chaque particule α ou β détectée, enregistrement des données suivantes : instant de détection de la particule, coordonnées spatiales d'un point d'émergence de la particule, charge déposée par la particule à la détection ;
- analyse des données enregistrées de manière à détecter la présence du premier et/ou du second isotope radioactif dans l'échantillon solide, l'analyse des données comprenant les sous-étapes suivantes :
   * repérage de paires comprenant une première particule détectée et une seconde particule détectée plus tard que la première, ladite paire vérifiant les critères suivants : instants de détection respectifs de la première particule détectée et de la seconde particule détectée séparés par un intervalle de temps inférieur à une limite de temps de paire donnée ; distance entre les points d'émergence respectifs de la première particule détectée et de la seconde particule détectée inférieure à une limite spatiale de paire donnée ; charge déposée par la première particule détectée correspondant au type de la première particule émise par le premier isotope lors de sa désintégration ; charge déposée par la seconde particule détectée correspondant au type de la seconde particule émise par le second isotope lors de sa désintégration ;
   * comptage du nombre de paires repérées.

Du fait de l'utilisation pour l'analyse de données de plusieurs critères simultanés, il est possible de détecter la présence de traces des premiers et/ou seconds isotopes radioactifs dans l'échantillon solide. La méthode repose en effet sur le repérage de paires de particules dont les instants de détection sont très proches l'un de l'autre, et dont les points d'émergence sont correspondants.

Ceci permet d'inférer avec une probabilité élevée de certitude que ces deux particules correspondent à la désintégration successivement du premier et du second isotope, et donc de conclure que les descendants de l'élément radioactif recherché sont présents dans l'échantillon solide.

L'analyse des charges émises par les première et seconde particules détectées permet de confirmer que les particules détectées correspondent bien aux types de particules émises par désintégration des premier et second isotopes.

À l'issue du comptage, il est possible d'établir une cartographie de l'échantillon solide, permettant d'apprécier la distribution des premier et second isotopes dans cet échantillon.

Le procédé peut en outre présenter une ou plusieurs des caractéristiques ci-dessous, considérées individuellement ou selon toutes les combinaisons techniquement possibles :
- les instants de détection respectifs des première et seconde particules détectées d'une même paire sont immédiatement consécutifs, aucune autre particule n'étant détectée entre les première et seconde particules détectées ;
- la chaîne de désintégration passe successivement par une pluralité d'isotopes radioactifs se désintégrant chacun par émission d'une particule d'un type α ou β avec une période de demi-vie, la seconde période de demi-vie étant la plus petite du groupe des périodes de demi-vie de la chaîne de désintégration supérieure à un temps mort du détecteur ;
- ledit intervalle de temps est inférieur à vingt fois la seconde période de demi-vie ;
- l'étape d'analyse des données comprend en outre une sous-étape de cartographie dans l'échantillon solide des coordonnées spatiales des points d'émergence des première et seconde particules détectées des paires repérées ;
- la chaîne de désintégration passe par un troisième isotope radioactif immédiatement avant le premier isotope radioactif, le troisième isotope se désintégrant par émission d'une troisième particule d'un type α ou β, l'étape d'analyse des données comprenant une sous-étape de recherche, pour chaque paire repérée, d'une troisième particule détectée vérifiant les critères suivants : instant de détection de la troisième particule détectée antérieur à l'instant de détection de la première particule détectée et séparé de celui-ci par un intervalle de temps inférieur à une limite de temps de triplet donnée ; distance entre les points d'émergences respectifs de la troisième particule détectée et de la première particule détectée inférieure à une limite spatiale de triplet donnée ; charge déposée par la troisième particule détectée correspondant au type de la troisième particule émise par le troisième isotope lors de sa désintégration ;
- la chaîne de désintégration est choisie parmi :
   - celle de l' ²³⁵U, le premier isotope étant le ²¹⁹Rn, le second isotope étant le ²¹⁵Po ; ou
   - celle du ²³³U, le premier isotope étant le ²¹⁴Bi, le second isotope étant le ²¹⁴Po ; ou
   - celle du ²³²Th, le premier isotope étant le ²²⁰Rn, le second isotope étant le ²¹⁶Po ; ou
   - celle du ²³⁷Np le premier isotope étant le ²²¹Fr, le second isotope étant le ²¹⁷At.

Selon un second aspect, l'invention porte sur un ensemble de caractérisation d'un échantillon solide susceptible de contenir un élément radioactif se désintégrant suivant une chaine de désintégration par émission de particules α et/ou β, la chaîne de désintégration passant successivement par un premier isotope radioactif puis par un second isotope radioactif, le premier isotope se désintégrant par émission d'une première particule d'un type α ou β avec une première période de demi-vie, le second isotope se désintégrant par émission d'une seconde particule d'un type α ou β avec une seconde période de demi-vie inférieure à la première période de demi-vie, l'ensemble de caractérisation comprenant:
- un système d'autoradiographie de l'échantillon solide, comprenant un détecteur configuré pour détecter des particules α et/ou β émises par l'échantillon solide, et, pour chaque particule α ou β détectée, enregistrer les données suivantes : instant de détection de la particule, coordonnées spatiales d'un point d'émergence de la particule, charge déposée par la particule à la détection ;
- une unité d'analyse des données enregistrées, configurée de manière à identifier la présence du premier et/ou du second isotope radioactif dans l'échantillon solide, l'unité d'analyse des données étant configurée pour :
   * repérer des paires comprenant une première particule détectée et une seconde particule détectée plus tard que la première, ladite paire vérifiant les critères suivants : instants de détection respectifs de la première particule détectée et de la seconde particule détectée séparés par un intervalle de temps inférieur à une limite de temps de paire donnée ; distance entre les points d'émergence respectifs de la première particule détectée et de la seconde particule détectée inférieure à une limite spatiale de paire donnée ; charge déposée par la première particule détectée correspondant au type de la première particule émise par le premier isotope lors de sa désintégration ; charge déposée par la seconde particule détectée correspondant au type de la seconde particule émise par le second isotope lors de sa désintégration ;
   * compter le nombre de paires repérées..

L'ensemble de caractérisation peut en outre être tel que :
- l'unité d'analyse des données est configurée pour cartographier, dans l'échantillon solide, les coordonnées spatiales des points d'émergence des première et seconde particules détectées des paires repérées ;
- la chaîne de désintégration passe par un troisième isotope radioactif immédiatement avant le premier isotope radioactif, le troisième isotope se désintégrant par émission d'une troisième particule d'un type α ou β, l'unité d'analyse des données étant configurée pour rechercher, pour chaque paire repérée, une troisième particule détectée vérifiant les critères suivants :
   - instant de détection de la troisième particule détectée antérieur à l'instant de détection de la première particule détectée et séparé de celui-ci par un intervalle de temps inférieur à une limite de temps de triplet donnée ;
   - distance entre les points d'émergences respectifs de la troisième particule détectée et de la première particule détectée inférieure à une limite spatiale de triplet donnée ;
   - charge déposée par la troisième particule détectée correspondant au type de la troisième particule émise par le troisième isotope lors de sa désintégration.

D'autres caractéristiques et avantages de l'invention ressortiront de la description détaillée qui en est donnée ci-dessous, à titre indicatif et nullement limitatif, en référence aux figures annexées, parmi lesquelles :
- La figure 1 représente les chaines de décroissance de l'uranium 235 et de l'uranium 238 ;
- La figure 2 est une représentation schématique simplifiée de l'ensemble de caractérisation de l'invention ;
- La figure 3 est une représentation schématique de la structure des données enregistrées par le système d'autoradiographie de la figure 2 ;
- Les figures 4 et 5 sont des graphes indiquant, pour un échantillon de minerai d'uranium, le nombre de particules détectées en fonction de l'amplitude du signal mesuré, quand le système d'autoradiographie fonctionne en mode α (figure 4) et quand il fonctionne en mode électron (figure 5) ;
- La figure 6 est un graphe montrant, pour les paires de particules détectées sensiblement simultanément et à la même position, l'histogramme 2D de l'amplitude du signal généré par la première particule détectée, et de l'amplitude du signal généré par la seconde particule détectée , les données étant acquises avec le système d'autoradiographie en mode électron ;
- La figure 7 est un graphe montrant la distribution de distance entre les points d'émergence respectifs des paires de particules α émises de manière sensiblement simultanée dans une fenêtre temporelle de 18 ms, pour un échantillon de minerai d'uranium à l'équilibre séculaire, les données étant acquises avec le système d'autoradiographie en mode α ;
- La figure 8 est un graphe montrant la distribution des intervalles de temps séparant les instants de détection respectifs des paires de particules α successives, pour les mêmes données que sur la figure 7 ;
- La figure 9 est un graphe similaire à celui de la figure 8, limité aux particules dont les points d'émergence sont sensiblement coïncidents ;
- La figure 10 est une vue similaire à celle de la figure 9, montrant la distribution d'intervalles de temps de détection des première et seconde particules d'une même paire, pour une autre application dans laquelle la première particule correspond à la désintégration du ²¹⁴Bi et la seconde particule à la désintégration du ²¹⁴Po ;
- La figure 11 est une représentation schématique d'une variante de la méthode, visant à détecter trois désintégrations successives (²²³Ra, ²¹⁹Rn et ²¹⁵Po), et pas seulement deux désintégrations successives ; et
- La figure 12 est un graphe similaire à celui de la figure 8, illustrant la distribution d'intervalle de temps de détection entre la troisième particule et la première particule dans la variante de réalisation de la figure 11.

L'invention concerne un procédé et un ensemble de caractérisation d'un échantillon solide susceptible de contenir un élément radioactif se désintégrant suivant une chaine de désintégration par émission de particules α et/ou β.

L'échantillon solide est typiquement un échantillon géologique, par exemple un minerai d'uranium. En variante, cet échantillon est un résidu ou déchet minier provenant par exemple d'une mine d'uranium, ou un matériau naturel tel que du granite susceptible de contenir du radon, ou tout autre matériau naturel ou artificiel susceptible de contenir une telle chaîne de désintégration possédant un élément à demi-vie courte.

L'élément radioactif contenu dans l'échantillon solide est un radioisotope issu d'une chaine de désintégration radioactive comprenant au moins trois élément.

L'élément radioactif contenu dans l'échantillon solide est par exemple issu de la chaine de désintégration de l'uranium 235, de l'uranium 238, du thorium 232, du neptunium 237 ou plus généralement tout actinide naturel ou artificiel.

En variante, l'élément radioactif est un descendant d'un des éléments cités ci-dessus.

L'invention s'applique également dans le domaine médical, notamment en médecine nucléaire. Dans de telles applications des éléments radioactifs sont injectés dans le corps du patient, à des fins de thérapie ou d'imagerie.

L'échantillon solide dans ce cas est le corps du patient, ou un prélèvement réalisé sur le corps du patient. L'échantillon est par exemple un prélèvement d'un tissu d'un patient ou d'un animal d'étude.

Dans ce cas, l'élément radioactif contenu dans l'échantillon solide est par exemple le ²²⁵Ac, le ²²³Ra, le ²²⁷Th ou encore le ²¹³Bi.

La chaine de désintégration passe successivement par une pluralité d'isotopes radioactifs se désintégrant chacun par émission d'une particule d'un type α ou β, avec une période de demi-vie donnée.

La particule α est constituée de deux protons et de deux neutrons combinés, formant ainsi une particule identique au noyau d'hélium 4.

La particule β est typiquement un électron.

La chaine de désintégration s'arrête quand le dernier isotope radioactif, en se désintégrant, conduit à la formation d'un élément stable.

La chaine de désintégration peut souvent être à l'équilibre séculaire. A l'équilibre séculaire, au sein de la chaine de désintégrations, le nombre de désintégrations par unité de temps de tous les isotopes radioactifs de la chaine est sensiblement le même.

Les éléments radioactifs d'une chaîne de désintégration sont à l'équilibre séculaire si le système considéré est clos pendant une durée valant 10 fois la demi-vie la plus longue de ces éléments, excepté le premier élément de la chaîne.

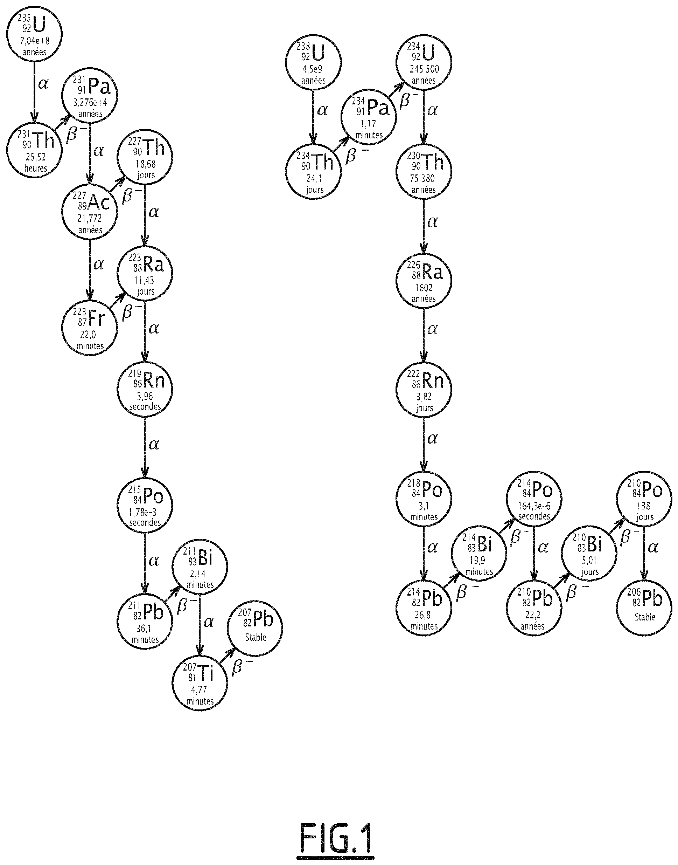

La figure 1 représente les chaines de désintégration de l'uranium 235 et de l'uranium 238.Les périodes de demi-vie des isotopes radioactifs de la chaine de désintégration vont de plusieurs millions d'années à quelques microsecondes.

La présente méthode de détection tire parti des désintégrations avec des périodes de demi-vie très courtes, typiquement inférieure à une seconde. Quand un premier isotope engendre par désintégration un second isotope de durée de demi-vie très courte, la désintégration de ce second isotope suit immédiatement la désintégration du premier isotope. Cette séquence entraine l'émission de deux particules à des instants très proches l'un de l'autre, provenant de la même zone de l'échantillon solide.

Dans la chaine de décroissance de l'uranium 235, le ²¹⁵Po se désintègre par émission d'une particule α, avec une période de demi-vie de 1,78 milliseconde. Ainsi, la désintégration du ²¹⁹Rn par émission d'une particule α est immédiatement suivie de la désintégration du ²¹⁵Po par émission d'une particule α.

Dans la chaine de décroissance de l'uranium 238, le ²¹⁴Po se désintègre par émission d'une particule α avec une période de demi-vie de 164 microsecondes. Ainsi, la désintégration du ²¹⁴Bi par émission d'une particule β⁻ est immédiatement suivie de la désintégration du ²¹⁴Po par émission d'une particule α.

Ainsi, dans le procédé de caractérisation de l'invention, on considère une chaine de désintégration passant successivement par un premier isotope radioactif puis par un second isotope radioactif, le premier isotope se désintégrant par émission d'une première particule de type α ou β avec une première période de demi-vie, le second isotope se désintégrant par émission d'une seconde particule d'un type α ou β avec une seconde période de demi-vie inférieure à la première période de demi-vie.

La méthode vise à détecter la présence du premier et/ou du second isotope radioactif dans l'échantillon solide.

Typiquement, la seconde période de demi-vie est la plus petite du groupe des périodes de demi-vie de la chaine de désintégrations supérieure au temps mort du détecteur.

Le temps mort du détecteur est l'intervalle de temps devant au minimum séparer deux événements pour que le détecteur puisse les distinguer l'un de l'autre.

Généralement, la seconde période de demi-vie est la plus petite du groupe des périodes de demi-vie de la chaine de désintégration.

Elle est typiquement inférieure à une seconde, de préférence inférieure à 100 millisecondes, et encore de préférence inférieure à 10 millisecondes.

Le procédé de caractérisation comprend une étape d'autoradiographie de l'échantillon solide, avec détection des particules α et/ou β émises par l'échantillon solide.

On appelle autoradiographie une technique de radiographie de l'échantillon solide sans source externe de radiation.

Pour chaque particule α ou β détectée, les données suivantes sont enregistrées : instant de détection de la particule, coordonnées spatiales du point d'émergence de la particule, charge déposée par la particule à la détection.

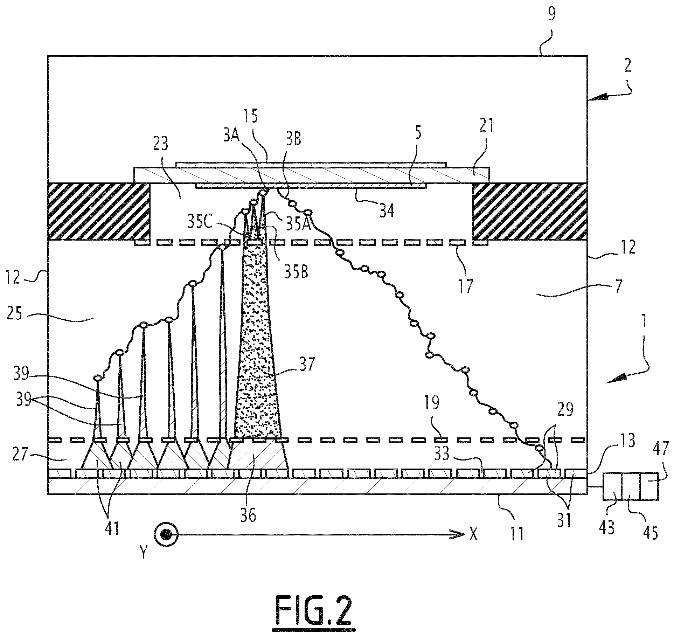

L'étape d'autoradiographie est réalisée par exemple dans le système d'autoradiographie 1 représenté sur la figure 2. Un tel système est vendu sous le nom Beaquant par la société Ai4R à Nantes. Il est décrit dans la demande de brevet FR3075980.

Le système d'autoradiographie 1 comprend un détecteur 2 adapté pour détecter les particules 3A, 3B de type α ou β émises par l'échantillon solide 5.

Le détecteur 2 est sensiblement similaire au détecteur gazeux décrit dans le document WO 2011/039473 A1.

Le détecteur 2 comprend une enceinte 7 définie par deux parois principales 9, 11 opposées et parallèles entre elles et des parois latérales 12.

Les parois principales 9, 11 ont par exemple une surface comprise entre 1 cm x 1 cm et 30 cm x 30 cm.

L'enceinte 7 contient un milieu de détection adapté pour émettre des électrons primaires sous l'effet du rayonnement α émis par l'échantillon 5.

Le milieu de détection est typiquement constitué d'un mélange gazeux circulant dans l'enceinte 7 entre une entrée et une sortie (non représentées).

Le mélange gazeux est par exemple un mélange entre un gaz rare, par exemple du xénon, et un gaz polyatomique, par exemple du CH₄.

Le mélange gazeux est avantageusement à une pression comprise entre 0,1 bar et 5 bars, par exemple 1 bar.

Le détecteur 2 comprend une anode 13, une cathode 15, une première électrode 17 et une deuxième électrode 19.

Typiquement, l'anode 13, la cathode 15, la première électrode 17 et la deuxième électrode 19 sont parallèles entre elles et parallèles aux deux parois principales 9, 11 de l'enceinte 7.

La cathode 15 est par exemple un adhésif conducteur, par exemple un adhésif de cuivre, collé sur une face d'une lame de verre 21, l'échantillon 5 étant disposé sur une face opposée de la lame de verre 21.

La cathode 15 et la première électrode 17 définissent entre elles un premier espace d'amplification 23.

La première électrode 17 et la deuxième électrode 19 définissent entre elles un espace de dérive 25.

La deuxième électrode 19 et l'anode 13 définissent entre elles un deuxième espace d'amplification 27.

Les phénomènes d'amplification et de dérive sont décrits dans la suite de la description.

La première électrode 17 et la deuxième électrode 19 sont par exemple des microgrilles de type MICROMEGAS telles que décrites dans WO 2011/039473 A1.

Avantageusement, des moyens de polarisation (non représentés) sont connectés à la cathode 15, à l'anode 13, à la première électrode 17 et à la deuxième électrode 19. Ils permettent de porter la cathode 15 à un potentiel V₁, l'anode 13 à un potentiel V₂, la première électrode 17 à un potentiel V₃ et la deuxième électrode 19 à un potentiel V₄.

Typiquement, ces potentiels vérifient la relation V₂ > V₄ > V₃ > V₁.

Les moyens de polarisation permettent ainsi de créer des champs électriques E₁, E₂, E₃ respectivement dans le premier espace d'amplification 23, l'espace de dérive 25 et le deuxième espace d'amplification 27.

Les champs électriques E₁ et E₃ dans le premier espace d'amplification 23 et le deuxième espace d'amplification 27 sont typiquement supérieurs à 3 kV/cm.

Le champ électrique E₂ dans l'espace de dérive 25 est par exemple inférieur à 3 kV/cm.

Les potentiels V₁, V₂, V₃ et V₄ sont avantageusement inférieurs à quelques kV par exemple 3 kV.

Le détecteur 2 comprend une pluralité de cellules de mesure 29 adaptées pour mesurer au moins un signal incident généré par une interaction de la particule 3A, 3B avec le milieu de détection du détecteur 2.

Dans le cas du détecteur 2 gazeux décrit ci-dessus, les cellules de mesure 29 sont formées par des anodes élémentaires ou pavés 31 de l'anode 13.

L'anode 13 est par exemple du type décrite dans le document WO 2011/039473 A1.

Les pavés 31 sont typiquement séparés les uns des autres par des espaces 33 et formant un réseau bidimensionnel de mesure en damier dont les rangées sont alignées selon des axes de coordonnées X et Y perpendiculaires.

Chaque pavé 31 forme par exemple un carré de moins d'un millimètre de côté, par exemple de 650 µm. Les pavés 31 sont alternativement affectés à la lecture de l'une ou l'autre des coordonnées X et Y. Deux pavés 31 voisins ne mesurent pas la même position selon la même coordonnée. L'espace 33 entre les pavés 31 est le plus faible possible, tout en permettant d'isoler chaque pavé 31 du pavé 31 voisin. Par exemple, l'espace 33 est inférieur ou égal à 100 µm.

La structure de chaque pavé 31 est par exemple similaire à celle décrite dans le document WO 2011/039473 A1.

Le signal mesuré par les pavés 31 est typiquement une charge électronique incidente.

Les pavés 31 permettent de convertir une charge électronique incidente en un courant électrique proportionnel à ladite charge.

Le courant électrique mesuré est traité dans l'électronique 43 du détecteur 2.

Les données sont enregistrées dans une unité de traitement numérique 45 du système d'autoradiographie 1, par exemple la mémoire d'un calculateur.

Cette unité 45 est raccordée numériquement à l'électronique de traitement 43 du détecteur 2.

L'échantillon solide 5 est typiquement une couche mince ayant une épaisseur comprise entre 5 µm et 100 µm, par exemple 20 µm.

L'échantillon 5 a par exemple des dimensions latérales avantageusement inférieures au champ de vue du détecteur 2, i.e. les dimensions de l'anode 13.

Le champ de vue du détecteur 2 correspond à l'angle solide au travers duquel le détecteur 2 est sensible au rayonnement des particules 3A, 3B.

L'échantillon 5 est typiquement déposé sur la lame de verre 21, de manière à maintenir l'échantillon sensiblement parallèle à l'anode 13.

La lame de verre 21 a typiquement une épaisseur d'un millimètre.

En variante, l'échantillon 5 est déposé sur une pièce métallique.

Avantageusement, la surface de l'échantillon 5 est sensiblement lisse et sensiblement parallèle à l'électrode 17.

Il présente une grande face plane 34, parallèle à l'anode 13 et tournée vers le premier espace d'amplification 23.

En référence à la figure 2, une particule 3A, 3B est émise par l'échantillon 5 au niveau de la grande face plane 34. La particule 3A, 3B traverse l'enceinte du détecteur 2 et interagit avec le milieu gazeux en générant des électrons primaires qui diffusent et se multiplient dans l'enceinte 7 du détecteur 2 depuis la cathode 15 jusqu'à l'anode 13.

Ce phénomène permet la détermination de la position d'émergence de la particule, en utilisant les cellules de mesure 29. La position d'émergence correspond à la position de la première interaction de la particule 3A, 3B avec le milieu de détection du détecteur 2
Cette position correspond à la localisation du radionucléide dans l'échantillon 5 qui est à l'origine de l'émission de la particule 3A, 3B.

Le champ électrique E₁ qui règne à l'intérieur du premier espace d'amplification 23 accélère les électrons créés par l'interaction entre la particule 3A, 3B et le milieu gazeux. Chaque électron entre en collision avec un atome de gaz et l'ionise avec la libération d'un nouvel électron. Les deux électrons ionisent à nouveau deux atomes de gaz qui libèrent à leur tour un électron chacun. Ainsi, par effet d'avalanche, de plus en plus d'électrons sont créés entre la cathode 15 et la première électrode 17.

Comme visible sur la figure 2, la particule 3A, 3B interagit successivement avec plusieurs atomes de gaz dans le premier espace d'amplification 23. Chacune de ces interactions est amplifiée par effet d'avalanche électronique et participe au pic de charge matérialisé par un trapèze 36 sur la figure 2.

Les électrons 35A, 35B et 35C générés par le phénomène d'avalanche électronique dans le premier espace d'amplification 23 diffusent ensuite dans l'espace de dérive 25. L'espace de dérive 25 permet de transférer les charges électroniques 39 et 37 jusqu'à l'anode 13.

Une deuxième amplification intervient dans le deuxième espace d'amplification 27 par effet d'avalanche électronique, de manière similaire à ce qui a été décrit plus haut.

La position d'entrée de la particule 3A, 3B dans l'espace d'amplification 23 est typiquement déterminée en utilisant les pavés 31, respectivement affectés à la mesure selon l'axe X et selon l'axe Y, recevant la charge électronique en sortie de l'espace d'amplification 27.

La position de la première interaction de la particule 3A, 3B avec le milieu de détection du détecteur 2 est alors déterminée à partir d'une répartition des signaux incidents mesurés par les cellules de mesure 29, c'est-à-dire à partir de la répartition des charges électroniques incidentes mesurées par les pavés 31 de l'anode 13. La position retenue correspond par exemple au barycentre des charges électroniques incidentes mesurées.

La position ainsi déterminée correspond à la position d'émergence de la particule 3A, 3B.

Après avoir traversé le premier espace d'amplification 23, la particule 3A, 3B poursuit son parcours dans l'espace de dérive 25. La particule 3A, 3B interagit alors successivement avec des atomes du milieu gazeux de l'espace de dérive et génère des électrons 39 qui diffusent dans l'espace de dérive 25 jusqu'au deuxième espace d'amplification 27 où les charges électroniques 41 sont amplifiées par effet d'avalanche électronique de manière similaire à ce qui a été décrit précédemment puis détectées par les pavés 31 de l'anode 13.

Certaines particules 3A, 3B poursuivent leurs parcours dans le deuxième espace d'amplification 27, où elles génèrent de nouveau des électrons, d'autres étant calorimétrisées dans le gaz et s'arrêtant à l'intérieur de l'enceinte.

Le détecteur 2 permet la détermination de la charge déposée par la particule 3A, 3B à l'intérieur du détecteur 2 en utilisant le signal incident mesuré.

On mesure pour cela les charges 41, 36 générées successivement le long d'une trajectoire de la particule 3A, 3B à l'intérieur du détecteur 2.

Les charges électroniques 41 et 36 sont typiquement diffusées dans l'espace de dérive 25 et amplifiées dans les deux espaces d'amplification 23 et 27.

Les mesures sont effectuées en utilisant les pavés 31 de l'anode.

Le système d'autoradiographie 1 permet donc pour chaque particule détectée d'enregistrer l'instant auquel la particule est émise par l'échantillon, de localiser spatialement chaque particule détectée dans l'échantillon solide, et de discriminer entre particule α et particule β sur la base de la charge déposée. Les particules β déposent typiquement une charge très inférieure aux particules α à l'intérieur du système d'autoradiographie.

La charge déposée est l'énergie cédée au milieu de détection par la particule.

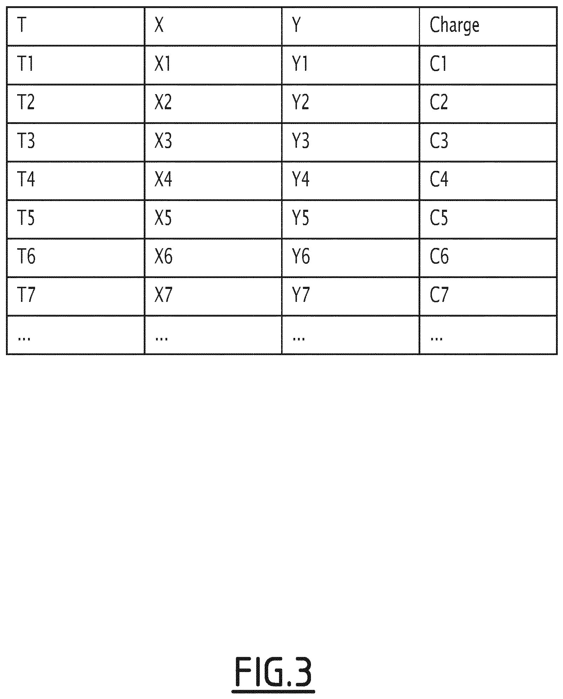

Les données enregistrées, comme illustré sur la figure 3, se présentent sous la forme d'un tableau, chaque ligne du tableau correspondant à une particule détectée. Chaque ligne comporte l'instant T auquel la particule a été détectée, les coordonnées spatiales X et Y du point d'émergence de la particule, et la charge C déposée par la particule dans le détecteur 2 du système d'autoradiographie.

Le temps mort du système autoradiographie correspond à l'intervalle de temps séparant la détection d'une particule par le détecteur 2 et l'enregistrement de son signal par l'électronique.

Le temps mort doit être significativement plus faible que la demi-vie de l'élément radioactif émettant la seconde particule.

Les données sont classées par ordre chronologique, c'est-à-dire par instant de détection croissant. L'origine des temps correspond à la mise en route de l'acquisition des données. L'instant de détection de la particule correspond sensiblement à l'instant d'émission de la particule à partir de l'échantillon solide.

Le procédé comporte en outre une étape d'analyse des données enregistrées, de manière à détecter la présence du premier et/ou du second isotope radioactif dans l'échantillon solide.

Pour ce faire, l'étape d'analyse des données comprend une sous-étape de repérage des paires comprenant une première particule détectée et une seconde particule détectée plus tard que la première, chaque paire de particules vérifiant les critères suivants :
- instants de détection respectifs de la première particule détectée et de la seconde particule détectée séparés par un intervalle de temps inférieur à une limite de temps de paire donnée ;
- distance entre les points d'émergence respectifs de la première particule détectée et de la seconde particule détectée inférieure à une limite spatiale de paire donnée ;
- charge déposée par la première particule détectée correspondant au type de la première particule émise par le premier isotope lors de sa désintégration ;
- charge déposée par la seconde particule détectée correspondant au type de la seconde particule émise par le second isotope lors de sa désintégration.

La sous-étape de repérage vise à repérer dans les données enregistrées toutes les paires de particules vérifiant les critères ci-dessus.

La limite de temps de paire donnée est choisie en référence avec la période de demi-vie du second isotope radioactif. Cette limite de temps de paire est choisie inférieure à vingt fois la seconde période de demi-vie, et est de préférence égale à dix fois la seconde période de demi-vie.

La limite de temps de paire peut être choisie relativement plus petite si l'activité totale de l'échantillon solide est élevée.

La limite de temps de paire donnée est choisie typiquement suffisamment petite pour que les instants de détection respectifs des première et seconde particules détectées d'une même paire soient immédiatement consécutifs. En d'autres termes, la probabilité qu'une autre particule soit détectée entre les première et seconde particules est faible.

La limite spatiale de paire donnée est très inférieure à la taille de l'échantillon, et plus précisément à celle de la grande face 34. Elle est typiquement de l'ordre de 200 à 400 micromètres.

L'étape d'analyse de données comporte encore une sous-étape de comptage du nombre de paires repérées.

La sous-étape de comptage, par exemple, fournit le nombre de paires repérées pour chaque point de l'échantillon solide.

En d'autres termes, elle fournit le nombre de paires repérées émergeant en chaque point de l'échantillon.

La sous-étape de comptage permet également de fournir le nombre total de paires repérées.

Avantageusement, l'étape d'analyse des données comprend une sous-étape de cartographie dans l'échantillon radiologique des coordonnées spatiales des points d'émergence des premières et secondes particules détectées des paires repérées.

Cette cartographie fournit pour chaque point de l'échantillon radiologique le nombre de paires repérées émergeant audit point. Elle se présente sous une forme graphique, ou tabulée, ou sous toute autre forme adaptée.

Comme indiqué plus haut, les données relatives à la charge déposée par la particule détectée dans le système d'autoradiographie permettent de discriminer entre les particules β⁻ et les particules α.

Le système d'autoradiographie peut par exemple fonctionner selon deux modes différents, le mode α et le mode électron.

En mode électron, le signal généré à l'anode 13 est traité avec un gain important dans l'électronique 43 du système d'autoradiographie. En effet, la charge déposée par les électrons est relativement faible. Le signal provenant du trajet de l'électron dans l'espace de dérive 25 est pratiquement impossible à distinguer du bruit de fond. Seul le signal créé dans le premier espace d'amplification 23 est suffisamment fort pour se distinguer du bruit de fond.

Au contraire, en mode α, le signal recueilli sur l'anode 13 est traité dans l'électronique de l'appareil avec un gain relativement plus faible. Ceci est dû au fait que la charge déposée par la particule α est élevée, et génère au niveau de l'anode 13 un signal bien distinct de celui du bruit de fond.

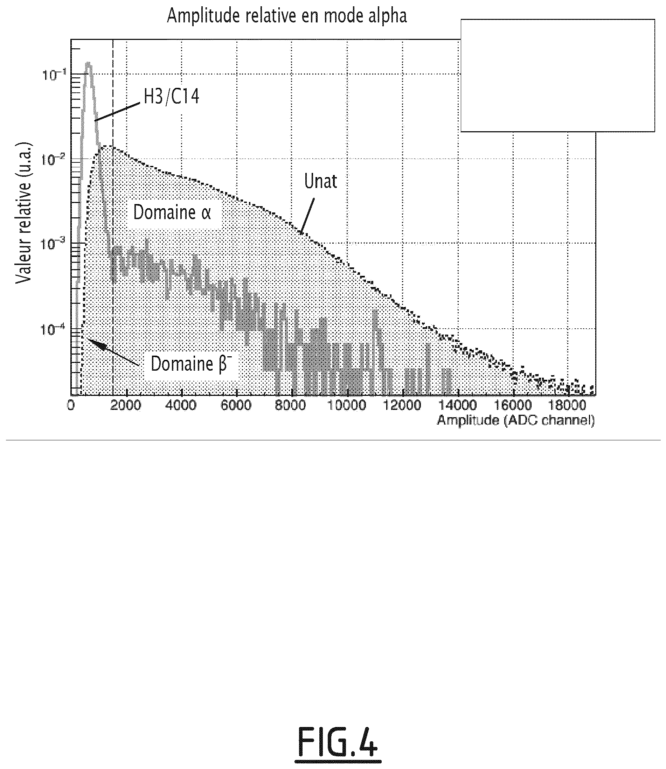

La figure 4 illustre le signal recueilli par le système d'autoradiographie en mode α, pour un échantillon de minerai d'uranium à l'équilibre séculaire. L'abscisse correspond à l'amplitude du signal, qui correspond elle-même à la charge déposée dans le détecteur 2 par la particule détectée. L'ordonnée correspond au nombre de particules détectées pour chaque valeur d'amplitude, exprimée en valeur relative.

La valeur relative est aussi appelée fonction densité de probabilité en anglais (acronyme PDF en anglais). Elle correspond à une courbe normalisée pour laquelle l'intégrale est unitaire.

La courbe atteint un maximum pour une faible valeur d'amplitude puis décroit progressivement à partir de ce maximum. Les particules détectées générant un signal de faible amplitude correspondent aux électrons. Au contraire, les particules générant un signal de forte amplitude sont les particules α.

Dans l'exemple représenté, filtrer les particules détectées générant un signal d'une amplitude inférieure à 2000 permet d'éliminer les particules détectées de type β. Ceci est clairement mis en évidence par la courbe superposée à celle de l'échantillon de minerai d'uranium. Cette courbe a été recueillie dans les mêmes conditions, pour un échantillon contenant du ³H et du ¹⁴C. Ces isotopes sont des émetteurs β. La courbe pour ces isotopes montre un pic sous l'amplitude 2000.

Dans l'exemple représenté,65% du signal correspond aux particules alpha et 35% du signal correspond aux particules bêta.

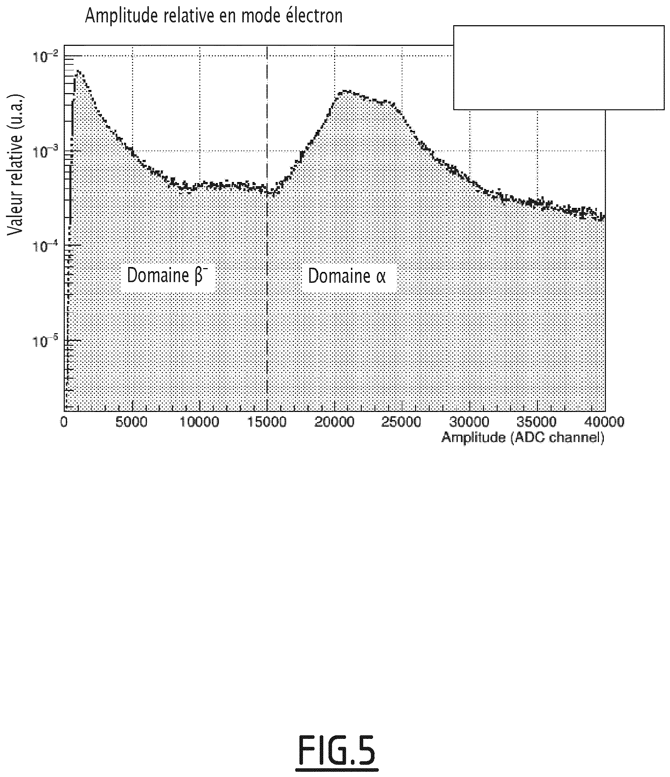

La figure 5 illustre le signal recueilli par le détecteur en mode électron, pour le même échantillon.

L'abscisse correspond à l'amplitude du signal recueilli, et l'ordonnée au nombre de particule détectée pour chaque amplitude, en valeur relative.

La figure 5 montre au niveau des fortes amplitudes une bosse significative, correspondant essentiellement aux particules α. Elle montre dans la partie des faibles amplitudes une autre bosse, correspondant aux particules β.

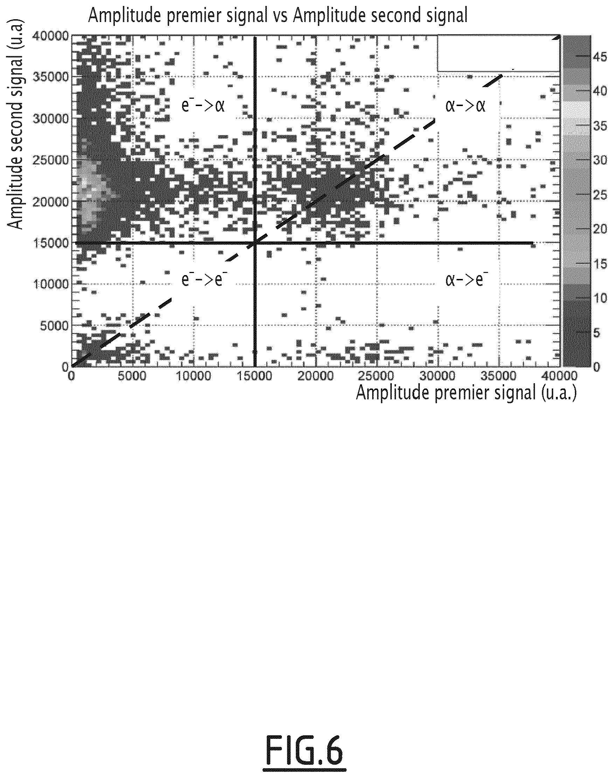

Éliminer toutes les particules avec une amplitude supérieure à 15000, dans l'exemple représenté, permet de filtrer les particules α, et de ne conserver que les particules β. Dans l'exemple représenté, 65'% du signal initial correspond aux particules alpha et35% du signal initial correspond aux particules bêta
La figure 6 montre qu'il est possible de reconnaitre les types de particules sur la base de l'amplitude du signal recueilli, correspondant à la charge déposée dans le système d'autoradiographie.

Les données traitées ont été recueillies par le système d'autoradiographie pour un échantillon de minerai d'uranium à l'équilibre séculaire, en mode électron. Sur la figure 6, l'abscisse correspond à l'amplitude du signal généré par la première particule détectée, et l'ordonnée correspond à l'amplitude du signal généré par la seconde particule détectée.

La figure 6 représente la distribution bidimensionnelle des amplitudes des deux particules détectées. La nuance de gris est fonction du nombre de paires de particules détectées, selon la charte situé à droite du graphique. Les paires de particules considérées vérifient le critère sur l'intervalle entre les instants de détection et le critère sur la distance entre les points d'émergence. Le critère sur l'intervalle entre les instants de détection était de 17.8 ms. Le critère sur la distance entre les points d'émergence était de 413 micromètres.

La figure 6 a été divisée en quatre cadrans, par deux droites placées chacune à une amplitude de 15000.

Le cadran supérieur à droite correspond aux paires de particules détectées composées de deux particules α. Le cadran en haut à gauche correspond aux paires de particules détectées composées d'abord d'une première particule β puis d'une seconde particule α.

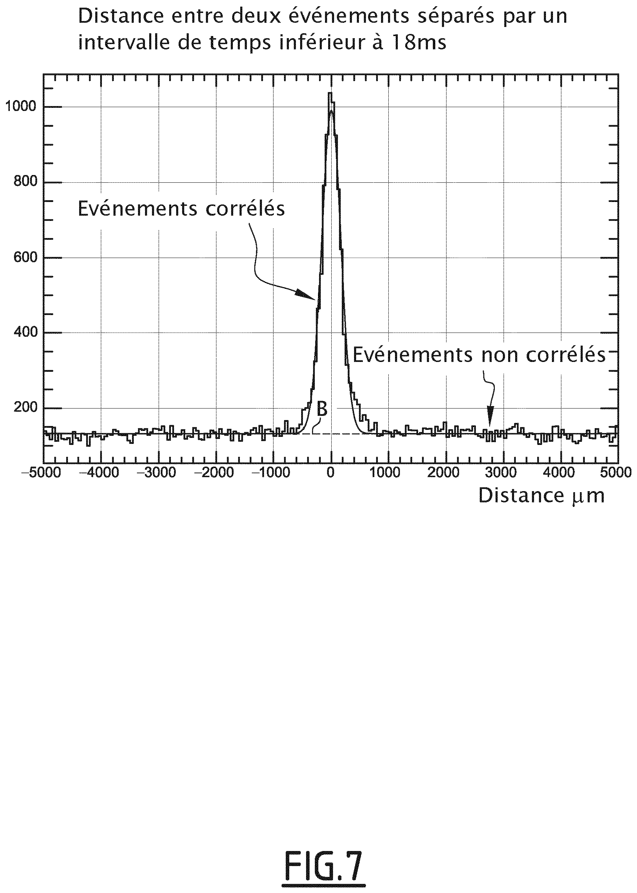

Les figures 7 à 9 illustrent les données recueillies par autoradiographie d'un échantillon de minerai d'uranium contenant de l'uranium 235 et de l'uranium 238.

L'autoradiographie était effectuée avec le détecteur 2 en mode α.

La figure 7 représente la distribution de distance entre les points d'émergence respectifs des paires de particules α émises de manière sensiblement simultanée.

En d'autres termes, seules sont considérées dans la figure 7 les paires de particules telles que :
- les instants de détection respectifs de la première particule et de la seconde particule sont séparés par un intervalle de temps inférieur à 18 millisecondes, soit 10 demi vies du ²¹⁵Po ;
- la charge déposée par la première particule détectée montre que cette particule est de type α ;
- la charge déposée par la seconde particule détectée montre que cette seconde particule est de type α.

Les caractéristiques choisies visent à repérer les paires correspondant à la désintégration, dans la chaine de l'uranium 235, du ²¹⁹Rn, immédiatement suivie par la désintégration du ²¹⁵Po.

Sur la figure 7, la distance en micromètre entre particules successives est en abscisse, et le nombre de paires identifiées est en ordonnée.

La figure 7 montre que la distribution est fortement centrée sur une distance de 0 micromètre. Le pic central correspond à des émissions de particule α pratiquement simultanées, et provenant du même point de l'échantillon solide. Ces paires peuvent être rattachées avec un haut degré de probabilité à la désintégration d'un ²¹⁹Rn suivi d'un ²¹⁵Po.

Les paires qui ne sont pas situées dans le pic central correspondent à des désintégrations pratiquement simultanées, mais qui proviennent de points différents de l'échantillon solide. Ces paires ne peuvent pas être rattachées aux désintégrations successives d'un ²¹⁹Rn et d'un ²¹⁵Po.

Les paires situées sous le pic central et sous la ligne de base B correspondent à des particules de désintégration simultanée provenant sensiblement du même point d'émission mais qui ne sont pas émises par les isotopes recherchés. Ces paires proviennent de la probabilité aléatoire d'existence de paires coïncidentes à la fois spatialement et temporellement.

Le pic peut être sensiblement ajusté à une distribution gaussienne ayant un écart-type au niveau de la demi-hauteur de 165,3 micromètres environ. Pour cet exemple de réalisation, il est donc pertinent d'utiliser comme limite spatiale de paire pour le tri des paires de particules détectées une valeur de 413 micromètres, correspondant sensiblement à 2,5 fois l'écart-type de la distribution gaussienne. Ceci permet d'éliminer les paires de particules détectées simultanément mais provenant manifestement de points différents de l'échantillon radiologique. Ceci ne permet pas d'éliminer les paires de particules détectées simultanément et provenant du même point d'émission qui proviennent de la probabilité de Poisson de création de paires.

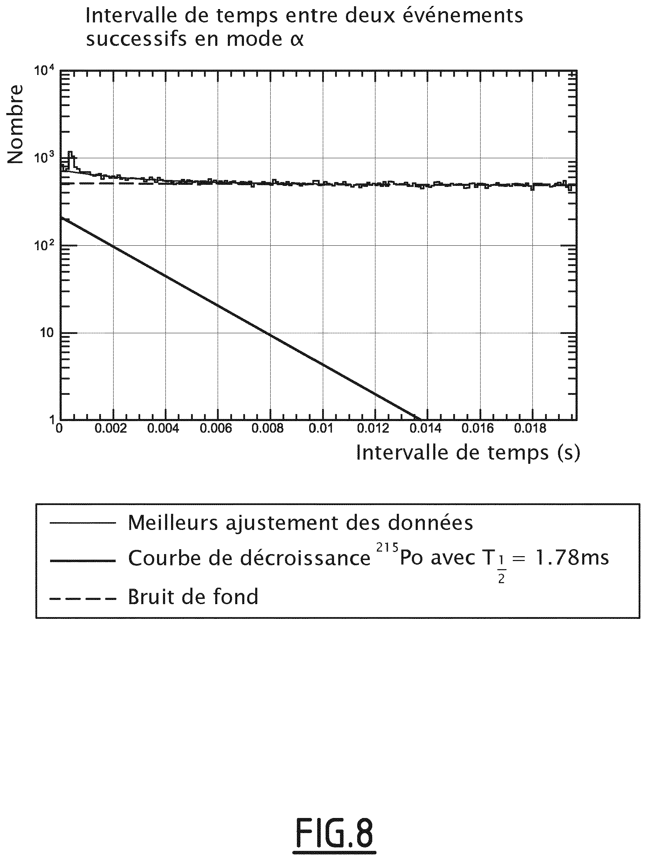

La figure 8 représente la distribution des intervalles de temps séparant les instants de détection respectifs d'une même paire de particules. Les données utilisées sont les mêmes que pour la figure 7.

Seules sont considérés pour la figure 8 les paires de particules vérifiant les critères suivants :
- la charge déposée par la première particule détectée correspond à une particule de type α ;
- la charge déposée par la seconde particule détectée correspond à une particule de type α ;
- la première particule détectée et la seconde particule détectée sont successives, le système d'autoradiographie n'ayant détecté aucune autre particule entre la première et la seconde particule détectées, et l'intervalle entre les instants de détection est inférieur à 17,8 ms environ.

En revanche, aucun critère n'est appliqué sur la distance entre les points d'émergence des première et seconde particules détectées.

Sur la figure 8, l'intervalle de temps est en abscisse, et le nombre de paires de particules est en ordonnée.

La figure 8 montre que la distribution est sensiblement uniforme, avec une bosse de faible hauteur entre 0 et 0,5 millisecondes.

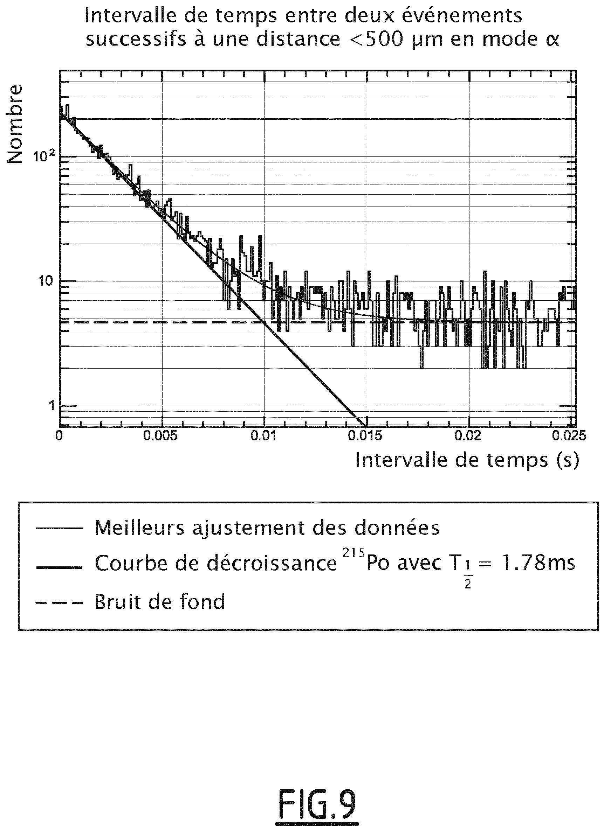

La figure 9 est similaire à la figure 8, mais seules sont retenues les paires de particules vérifiant, en plus des critères pour la figure 8, une distance entre les points d'émergence inférieure à 413 micromètres.

La figure 9 montre que la distribution présente un maximum centré sur l'origine des temps, puis décroissant et tendant vers l'horizontale à partir de 15 millisecondes. Cette distribution peut être ajustée à une loi de décroissance exponentielle, avec une durée de demi-vie de 1,78 milliseconde, correspondant à la demi-vie du ²¹⁵PO.

Cette loi exponentielle a pour équation : $C = {C}_{0} {e}^{- λ t}$
C₀ étant le nombre de doublets détectés pour t = 0 et
λ étant la période de demi-vie du ²¹⁵Po.

Le coefficient λ correspond aussi à la pente à l'origine de la courbe.

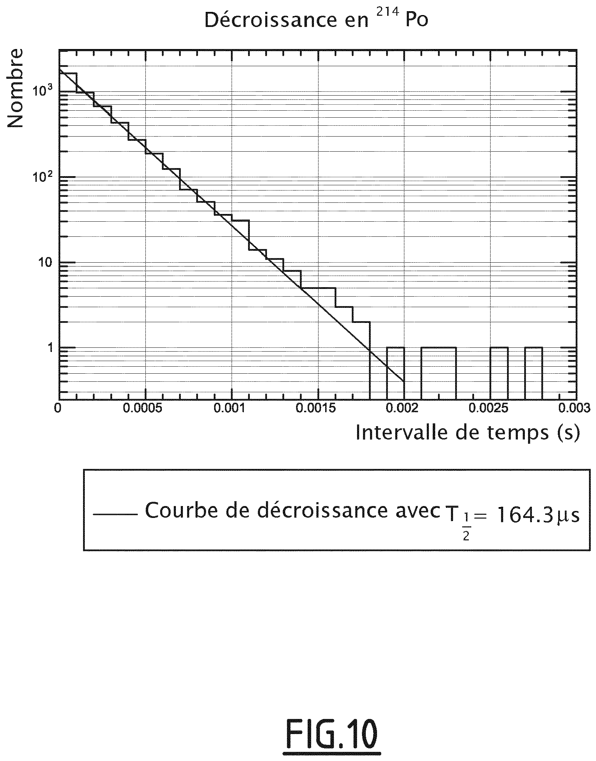

La figure 10 illustre les données recueillies par autoradiographie d'un échantillon de minerai d'uranium contenant de l'uranium 235 et de l'uranium 238.

L'autoradiographie était effectuée avec le détecteur 2 en mode électron.

La figure 10 est une courbe similaire à celle de la figure 9. Les données sont traitées de manière à détecter la présence de ²¹⁴Bi et de ²¹⁴Po, appartenant tous les deux à la chaine de décroissance radioactive de l'uranium 238.

La figure 10 représente la distribution d'intervalles de temps de détection pour les paires de particules vérifiant les critères suivants :
- La charge émise dans le système d'autoradiographie par la première particule détectée correspond à une particule de type β ;
- La charge émise dans le système d'autoradiographie par la seconde particule détectée correspond à une particule de type α ;
- La distance entre les points d'émergences respectifs des deux particules détectées est inférieure à 413 µm.

La distribution peut être ajustée à une décroissance exponentielle, avec une demi-vie de 164,3 microsecondes, correspondant à la demi-vie du ²¹⁴Po.

Selon une variante avantageuse, l'étape d'analyse des données enregistrées vise à détecter non seulement la présence du premier et du second isotopes radioactifs mais également la présence d'un troisième isotope radioactif situé dans la chaine de désintégration immédiatement avant le premier isotope radioactif.

Par exemple, le premier isotope est le ²¹⁹Rn, le deuxième est le ²¹⁵Po, et le troisième est le ²²³Ra, comme visible en référence à la figure 1 sur la chaine de décroissance de l'²³⁵U.

Le troisième isotope se désintègre par émission d'une troisième particule d'un type α ou β, avec une troisième période de demi-vie
L'étape d'analyse des données comprend dans ce cas une sous-étape de recherche, pour chaque paire repérée, d'une troisième particule détectée vérifiant les critères suivants :
- instant de détection de la troisième particule détectée antérieur à l'instant de détection de la première particule détectée et séparé de celui-ci par un intervalle de temps inférieur à une limite de temps de triplet donnée ;
- distance entre les points d'émergence respectifs de la troisième particule détectée et de la première particule détectée inférieure à une limite spatiale de triplet donnée ;
- charge déposée par la troisième particule détectée correspondant au type de la troisième particule émise par le troisième isotope lors de sa désintégration.

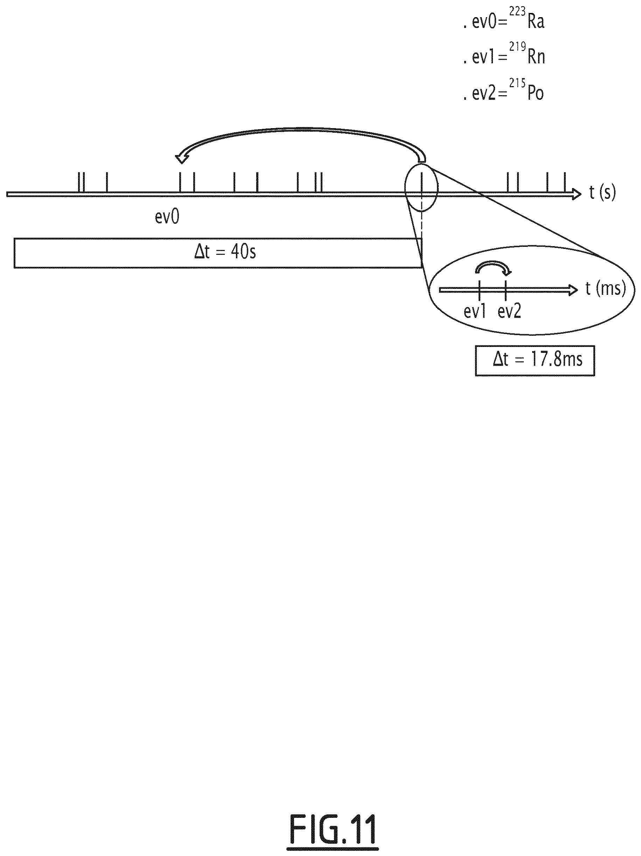

La situation est représentée de manière schématique sur la figure 11.

La limite de temps de triplet donnée est déterminée en considération de la période de demi-vie du premier élément radioactif, qui est dans l'exemple représenté le ²¹⁹Rn (le deuxième isotope étant le ²¹⁵Po et le troisième le ²²³Ra).

Par exemple, ledit autre intervalle de temps est inférieur ou égal à vingt fois la première période de demi-vie, de préférence égal à dix fois la première période de demi-vie.

La limite spatiale de triplet est typiquement choisie égale à la limite spatiale de paire utilisée pour rechercher les paires de particules détectées.

À l'issue de la sous-étape de recherche, le nombre de troisièmes particules détectées est compté et éventuellement cartographié en fonction du point d'émergence sur l'échantillon solide.

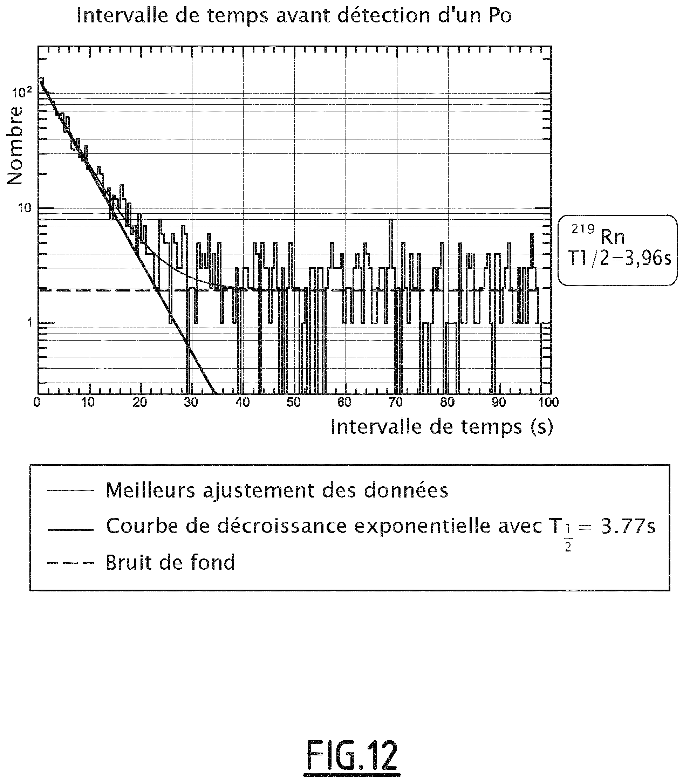

La figure 12 illustre les résultats obtenus avec la variante de réalisation ci-dessus.

La sous-étape de recherche a été appliquée sur les données utilisées pour les figures 7 à 9.

Elle vise à identifier la présence de trois isotopes. Le premier isotope est le ²¹⁹Rn, le deuxième isotope est le ²¹⁵Po, et le troisième isotope est le ²²³Ra.

Les critères utilisés pour identifier les paires issues du premier et du deuxième radioisotope sont les mêmes que ceux utilisés pour les figures 7 à 9 : intervalle de temps de 18 ms, limite spatiale de paire de 413 micromètres, première particule détectée de type α, deuxième particule détectée de type α.

Pour la sous-étape de recherche, la limite spatiale de triplet est de 413 micromètres.

La période de demi-vie du ²¹⁹Rn est de 3,96 secondes, la limite de temps de triplet étant fixée à 40 secondes.

La deuxième particule détectée est de type α, et la troisième particule détectée est de type α.

La figure 12 est une vue similaire à celle de la figure 8.

La figure 12 montre la distribution d'intervalles de temps entre l'instant de détection de la troisième particule, c'est-à-dire la particule émise par le ²²³Ra, et l'instant de détection de la première particule, c'est-à-dire la particule émise par le ²¹⁹Rn.

Sur cette figure, l'abscisse correspond à l'intervalle de temps, exprimé en seconde, et l'ordonnée correspond au nombre de triplets de particules détectées trouvés à la sous-étape de recherche.

La distribution peut être ajustée à une courbe exponentielle ayant pour équation : $C = {C}_{0} {e}^{- λ t}$
C₀ étant le nombre de triplets pour t = 0 et
λ étant la période de demi-vie du ²¹⁹Rn.

Le coefficient λ correspond aussi à la pente à l'origine de la courbe. La période de demi-vie ainsi calculée vaut environ 3,77 secondes, très proche de la demi-vie du ²¹⁹Rn (3,96 secondes).

Le procédé de caractérisation peut être appliqué, comme décrit ci-dessus, quand la chaîne de désintégration est celle de l'²³⁵U, le premier isotope étant le ²¹⁹Rn et le second isotope étant le ²¹⁵Po.

Il a été décrit ci-dessus également une application au cas où la chaîne de désintégration est celle du ²³⁸U, le premier isotope étant le ²¹⁴Bi et le second isotope étant le ²¹⁴Po.

D'autres applications sont possibles. Le procédé de caractérisation peut être appliqué quand la chaîne de désintégration est celle du ²³²Th, le premier isotope étant le ²²⁰Rn et le second isotope étant le ²¹⁶Po. Il peut être également appliqué quand la chaîne de désintégration est celle du ²³⁷Np, le premier isotope étant le ²²¹Fr et le second isotope étant le ²¹⁷At.

Pour les applications médicales, plusieurs chaînes de désintégration peuvent être considérées.

Par exemple, la chaîne de désintégration est celle du ²²⁵Ac et le premier isotope étant le ²²¹Fr et le second isotope étant le ²¹⁷At.

En variante, la chaîne de désintégration est celle du ²²³Ra, le premier isotope étant le ²¹⁹Rn et le second isotope étant le ²¹⁵Po. La chaîne de désintégration du ²²³Ra constitue une partie de la chaine de désintégration du ²³¹U (voir figure 1).

Selon une autre variante, la chaîne de désintégration est celle du ²²⁷Th, le premier isotope étant le ²¹⁹Rn et le second isotope étant le ²¹⁵Po. La chaîne de désintégration du ²²⁷Th constitue une partie de la chaine de désintégration du ²³⁵U (voir figure 1).

Selon une autre variante, la chaîne de désintégration est celle du ²¹³Bi, le premier isotope étant le ²¹³Bi et le second isotope étant le ²¹³Po.

D'autres chaînes de désintégration peuvent être considérées.

L'invention porte également sur un ensemble de caractérisation d'un échantillon solide susceptible de contenir un élément radioactif se désintégrant suivant une chaine de désintégrations par émission de particules α et/ou β.

Cet ensemble de caractérisation est particulièrement adapté pour la mise en oeuvre du procédé de caractérisation décrit ci-dessus.

Inversement, le procédé est spécialement conçu pour être mis en oeuvre par l'ensemble de caractérisation décrit ci-dessous.

L'échantillon solide est du type décrit ci-dessus, et l'élément radioactif est également du type décrit ci-dessus.

L'ensemble de caractérisation comprend un système d'autoradiographie 1 de l'échantillon solide, comprenant un détecteur 2 configuré pour détecter des particules α et/ou β émises par l'échantillon solide, et, pour chaque particule α ou β détectée, enregistrer les données suivantes : instant de détection de la particule, coordonnées spatiales d'un point d'émergence de la particule, charge déposée par la particule à la détection.

Le système d'autoradiographie 1 est du type décrit plus haut en référence à la figure 2. Typiquement, il s'agit d'un appareil du type Beaquant, commercialisé par la société Ai4R, Nantes.

Le système d'autoradiographie 1 comprend une unité de traitement numérique 45 configurée pour enregistrer les données ci-dessus, par exemple la mémoire d'un calculateur.

Cette unité 45 est raccordée numériquement à l'électronique de traitement 43 du détecteur 2.

Les données sont structurées comme décrit plus haut et représentées sur la figure 3.

L'ensemble de caractérisation comprend en outre une unité 47 d'analyse des données enregistrées, configurée de manière à identifier la présence du premier isotope radioactif et/ou du second isotope radioactif dans l'échantillon solide.

L'unité 47 d'analyse des données enregistrées est par exemple formée d'un processeur et d'une mémoire associée au processeur. Des logiciels sont stockés dans la mémoire et, quand ils sont exécutés par le processeur, permettent la détection de la présence du premier et/ou du second isotope radioactif dans l'échantillon solide.

En variante, l'unité d'analyse 47 est réalisée sous la forme d'un composant logique programmable tel que des FPGA (de l'anglais Field-Programmable Gate Array), ou encore sous forme de circuit intégré dédié tel que des ASIC (de l'anglais Application-Specific Integrated Circuit).

L'unité d'analyse des données 47 est configurée pour :
- repérer des paires comprenant une première particule détectée et une seconde particule détectée plus tard que la première particule, ladite paire vérifiant les critères suivants : instants de détection respectifs de la première particule détectée et de la seconde particule détectée séparés par un intervalle de temps inférieur à une limite de temps de paire donnée ; distance entre les points d'émergences respectifs de la première particule détectée et de la seconde particule détectée inférieure à une limite spatiale de paire donnée ; charge déposée par la première particule détectée correspondant au type de la première particule émise par le premier isotope lors de sa désintégration ; charge déposée par la seconde particule détectée correspondant au type de la seconde particule émise par le second isotope lors de sa désintégration ;
- compter le nombre de paires repérées.

L'unité d'analyse des données 47 est configurée pour repérer les paires et compter le nombre de paires repérées comme décrit relativement au procédé de caractérisation.

En particulier, l'unité d'analyse des données 47 est configurée pour cartographier, dans l'échantillon radiologique, les coordonnées spatiales des points d'émergences des premières et secondes particules détectées des paires repérées.

En variante, l'unité d'analyse des données enregistrées est configurée pour identifier la présence dans l'échantillon solide, non seulement du premier isotope et du second isotope, mais également d'un troisième isotope radioactif, placé dans la chaine de désintégration immédiatement avant le premier isotope radioactif.

L'unité d'analyse des données 47 est alors configurée pour rechercher, pour chaque paire repérée, une troisième particule détectée vérifiant les critères suivants :
- instant de détection de la troisième particule détectée antérieur à l'instant de détection de la première particule détectée et séparé de celui-ci par un intervalle de temps inférieur à une limite de temps de triplet donnée ;
- distance entre les points d'émergences respectifs de la troisième particule détectée et de la première particule détectée inférieure à une limite spatiale de triplet donnée ;
- charge déposée par la troisième particule détectée correspondant au type de la troisième particule émise par le troisième isotope lors de sa désintégration.

L'unité d'analyse des données est configurée pour effectuer cette recherche comme décrit plus haut relativement au procédé de caractérisation.

L'ensemble de caractérisation 47 est configuré pour les mêmes applications que le procédé de caractérisation.

Le procédé et l'ensemble de caractérisations présentent de multiples avantages.

Le fait d'utiliser, pour constituer les paires de particules détectées, seulement des particules dont les instants de détection sont immédiatement consécutifs permet de simplifier l'étape de repérage des paires.

Le fait de rechercher dans l'échantillon solide comme second isotope radioactif celui ayant la plus petite des périodes de demi-vie du groupe des périodes de demi-vie de la chaîne de désintégration supérieures à un temps mort du détecteur, permet d'augmenter la précision de la caractérisation.

Le fait de rechercher dans l'échantillon des paires de particules émises au même instant (temps proches) et au même endroit (positions proches) permet d'écarter les paires aléatoires émises au même instant mais pas au même endroit.

Le fait que l'étape d'analyse des données comprenne une sous-étape de cartographie dans l'échantillon radiologique des coordonnées spatiales des points d'émergence des première et seconde particules détectées des paires repérées, permet d'obtenir une cartographie des isotopes radioactifs dans l'échantillon solide.

Cette cartographie peut ensuite être superposée sur une autre cartographie, montrant la composition chimique de l'échantillon solide. Ceci fournit des indications sur la forme chimique des isotopes radioactifs.

L'étape de comptage permet de quantifier la quantité des premier et second isotopes radioactifs présents dans l'échantillon solide. Du fait que l'échantillon solide est considéré comme étant en équilibre séculaire, ceci permet de déterminer la concentration d'autres isotopes radioactifs présents dans la chaine de désintégrations.

Dans le cas de résidus ou déchets provenant de mines notamment d'uranium, la détection de la paire ²¹⁴Bi, ²¹⁴Po permet de remonter à la quantité de ²²⁶Ra présent dans ces résidus ou déchets. Du fait que le ²²⁶Ra présente une période de demi-vie de 1602 ans, cet élément est particulièrement contraignant pour la gestion des résidus ou déchets miniers. La quantification et la localisation du ²²⁶Ra dans ces déchets est donc particulièrement importante pour choisir un mode de gestion approprié.

L'autoradiographie précise des éléments radioactifs ²¹⁹Rn et ²¹⁵Po permet de cartographier le radon. Le radon est un gaz radioactif qui a tendance à s'échapper de l'échantillon lors de sa formation. Ce gaz se crée par désintégration du radium. Le système permet de quantifier l'échappement du radon en comptant les paires ²¹⁹Rn/²¹⁵Po situées hors de l'échantillon solide.

Le procédé et l'ensemble de caractérisation peuvent présenter de multiples variantes.

Selon la figure 11, le troisième isotope radioactif recherché est situé immédiatement avant le premier isotope radioactif. Selon une variante avantageuse, si le troisième isotope radioactif recherché était situé immédiatement après le deuxième, l'étape d'analyse décrite par la figure 11 ne serait plus applicable. Néanmoins la recherche d'un troisième radionucléide issu de la désintégration du deuxième obéirait sensiblement aux mêmes principes.

L'autoradiographie peut être effectuée non pas dans un équipement du type décrit plus haut mais dans un équipement de scintillance.

## Revendications

1. Procédé de caractérisation d'un échantillon solide susceptible de contenir un élément radioactif se désintégrant suivant une chaîne de désintégration par émission de particules α et/ou β, la chaîne de désintégration passant successivement par un premier isotope radioactif puis par un second isotope radioactif, le premier isotope se désintégrant par émission d'une première particule d'un type α ou β avec une première période de demi-vie, le second isotope se désintégrant par émission d'une seconde particule d'un type α ou β avec une seconde période de demi-vie inférieure à la première période de demi-vie, le procédé comprenant les étapes suivantes :
- autoradiographie de l'échantillon solide, avec détection au moyen d'un détecteur (2) des particules α et/ou β émises par l'échantillon solide, et pour chaque particule α ou β détectée, enregistrement des données suivantes : instant de détection de la particule, coordonnées spatiales d'un point d'émergence de la particule, charge déposée par la particule à la détection ;
- analyse des données enregistrées de manière à détecter la présence du premier et/ou du second isotope radioactif dans l'échantillon solide, **caractérisé en ce que** l'analyse des données comprend les sous-étapes suivantes :
* repérage de paires comprenant une première particule détectée et une seconde particule détectée plus tard que la première, ladite paire vérifiant les critères suivants : instants de détection respectifs de la première particule détectée et de la seconde particule détectée séparés par un intervalle de temps inférieur à une limite de temps de paire donnée ; distance entre les points d'émergence respectifs de la première particule détectée et de la seconde particule détectée inférieure à une limite spatiale de paire donnée ; charge déposée par la première particule détectée correspondant au type de la première particule émise par le premier isotope lors de sa désintégration ; charge déposée par la seconde particule détectée correspondant au type de la seconde particule émise par le second isotope lors de sa désintégration ;
* comptage du nombre de paires repérées.

2. Procédé de caractérisation selon la revendication 1, dans lequel les instants de détection respectifs des première et seconde particules détectées d'une même paire sont immédiatement consécutifs, aucune autre particule n'étant détectée entre les première et seconde particules détectées.

3. Procédé de caractérisation selon la revendication 1 ou 2, dans lequel la chaîne de désintégration passe successivement par une pluralité d'isotopes radioactifs se désintégrant chacun par émission d'une particule d'un type α ou β avec une période de demi-vie, la seconde période de demi-vie étant la plus petite du groupe des périodes de demi-vie de la chaîne de désintégration supérieure à un temps mort du détecteur.

4. Procédé de caractérisation selon l'une quelconque des revendications précédentes, dans lequel ledit intervalle de temps est inférieur à vingt fois la seconde période de demi-vie.

5. Procédé de caractérisation selon l'une quelconque des revendications précédentes, dans lequel l'étape d'analyse des données comprend en outre une sous-étape de cartographie dans l'échantillon solide des coordonnées spatiales des points d'émergence des première et seconde particules détectées des paires repérées.

6. Procédé de caractérisation selon l'une quelconque des revendications précédentes, dans lequel la chaîne de désintégration passe par un troisième isotope radioactif immédiatement avant le premier isotope radioactif, le troisième isotope se désintégrant par émission d'une troisième particule d'un type α ou β, l'étape d'analyse des données comprenant une sous-étape de recherche, pour chaque paire repérée, d'une troisième particule détectée vérifiant les critères suivants : instant de détection de la troisième particule détectée antérieur à l'instant de détection de la première particule détectée et séparé de celui-ci par un intervalle de temps inférieur à une limite de temps de triplet donnée ; distance entre les points d'émergences respectifs de la troisième particule détectée et de la première particule détectée inférieure à une limite spatiale de triplet donnée ; charge déposée par la troisième particule détectée correspondant au type de la troisième particule émise par le troisième isotope lors de sa désintégration.

7. Procédé de caractérisation selon l'une quelconque des revendications précédentes, dans lequel la chaîne de désintégration est choisie parmi :
- celle de l' ²³⁵U, le premier isotope étant le ²¹⁹Rn, le second isotope étant le ²¹⁵Po ; ou
- celle du ²³³U, le premier isotope étant le ²¹⁴Bi, le second isotope étant le ²¹⁴Po ; ou
- celle du ²³²Th, le premier isotope étant le ²²⁰Rn, le second isotope étant le ²¹⁶Po ; ou
- celle du ²³⁷Np le premier isotope étant le ²²¹Fr, le second isotope étant le ²¹⁷At.

8. Ensemble de caractérisation d'un échantillon solide susceptible de contenir un élément radioactif se désintégrant suivant une chaîne de désintégration par émission de particules α et/ou β, la chaîne de désintégration passant successivement par un premier isotope radioactif puis par un second isotope radioactif, le premier isotope se désintégrant par émission d'une première particule d'un type α ou β avec une première période de demi-vie, le second isotope se désintégrant par émission d'une seconde particule d'un type α ou β avec une seconde période de demi-vie inférieure à la première période de demi-vie, l'ensemble de caractérisation comprenant:
- un système d'autoradiographie (1) de l'échantillon solide, comprenant un détecteur (2) configuré pour détecter des particules α et/ou β émises par l'échantillon solide, et, pour chaque particule α ou β détectée, enregistrer les données suivantes : instant de détection de la particule, coordonnées spatiales d'un point d'émergence de la particule, charge déposée par la particule à la détection ;
- une unité (47) d'analyse des données enregistrées, configurée de manière à identifier la présence du premier et/ou du second isotope radioactif dans l'échantillon solide, l'ensemble étant **caractérisé en ce que** l'unité d'analyse des données (47) étant configurée pour :
* repérer des paires comprenant une première particule détectée et une seconde particule détectée plus tard que la première, ladite paire vérifiant les critères suivants : instants de détection respectifs de la première particule détectée et de la seconde particule détectée séparés par un intervalle de temps inférieur à une limite de temps de paire donnée ; distance entre les points d'émergence respectifs de la première particule détectée et de la seconde particule détectée inférieure à une limite spatiale de paire donnée ; charge déposée par la première particule détectée correspondant au type de la première particule émise par le premier isotope lors de sa désintégration ; charge déposée par la seconde particule détectée correspondant au type de la seconde particule émise par le second isotope lors de sa désintégration ;
* compter le nombre de paires repérées.

9. Ensemble de caractérisation selon revendication 8, dans lequel l'unité d'analyse des données (47) est configurée pour cartographier, dans l'échantillon solide, les coordonnées spatiales des points d'émergence des première et seconde particules détectées des paires repérées.

10. Ensemble de caractérisation selon revendication 8 ou 9, dans lequel la chaîne de désintégration passe par un troisième isotope radioactif immédiatement avant le premier isotope radioactif, le troisième isotope se désintégrant par émission d'une troisième particule d'un type α ou β, l'unité d'analyse des données (47) étant configurée pour rechercher, pour chaque paire repérée, une troisième particule détectée vérifiant les critères suivants :
- instant de détection de la troisième particule détectée antérieur à l'instant de détection de la première particule détectée et séparé de celui-ci par un intervalle de temps inférieur à une limite de temps de triplet donnée ;
- distance entre les points d'émergences respectifs de la troisième particule détectée et de la première particule détectée inférieure à une limite spatiale de triplet donnée ;
- charge déposée par la troisième particule détectée correspondant au type de la troisième particule émise par le troisième isotope lors de sa désintégration.

## Patentansprüche

1. Verfahren zur Charakterisierung einer festen Probe, die ein radioaktives Element enthalten kann, das gemäß einer Zerfallskette durch Emission von α- und/oder β-Teilchen zerfällt, wobei die Zerfallskette nacheinander über ein erstes radioaktives Isotop und anschließend über ein zweites radioaktives Isotop verläuft, wobei das erste Isotop durch Emission eines ersten Teilchens eines Typs α oder β mit einer ersten Halbwertszeit zerfällt, wobei das zweite Isotop durch Emission eines zweiten Teilchens eines Typs α oder β mit einer zweiten Halbwertszeit zerfällt, die kleiner als die erste Halbwertszeit ist, wobei das Verfahren die folgenden Schritte umfasst:
- Autoradiographie der festen Probe, mit Detektion mittels eines Detektors (2) der von der festen Probe emittierten α- und/oder β-Teilchen, und für jedes detektierte α- oder β-Teilchen Aufzeichnung der folgenden Daten: Detektionszeitpunkt des Teilchens, räumliche Koordinaten eines Austrittspunkts des Teilchens, bei der Detektion durch das Teilchen deponierte Ladung;
- Analyse der aufgezeichneten Daten, um das Vorhandensein des ersten und/oder des zweiten radioaktiven Isotops in der festen Probe zu detektieren, **dadurch gekennzeichnet, dass** die Analyse der Daten die folgenden Teilschritte umfasst:
* Auffinden von Paaren, die ein erstes detektiertes Teilchen und ein zweites detektiertes Teilchen umfassen, das später als das erste detektierte Teilchen detektiert wurde, wobei das Paar die folgenden Kriterien erfüllt: jeweilige Detektionszeitpunkte des ersten detektierten Teilchens und des zweiten detektierten Teilchens durch ein Zeitintervall getrennt sind, das kleiner als eine vorgegebene Paarzeitgrenze ist; Abstand zwischen den jeweiligen Austrittspunkten des ersten detektierten Teilchens und des zweiten detektierten Teilchens kleiner als eine vorgegebene räumliche Paargrenze ist; durch das erste detektierte Teilchen deponierte Ladung dem Typ des ersten Teilchens entspricht, das von dem ersten Isotop bei dessen Zerfall emittiert wird; durch das zweite detektierte Teilchen deponierte Ladung dem Typ des zweiten Teilchens entspricht, das von dem zweiten Isotop bei dessen Zerfall emittiert wird;
* Zählen der Anzahl der aufgefundenen Paare.

2. Verfahren zur Charakterisierung nach Anspruch 1, wobei die jeweiligen Detektionszeitpunkte des ersten und des zweiten detektierten Teilchens desselben Paars unmittelbar aufeinanderfolgen, wobei kein anderes Teilchen zwischen dem ersten und dem zweiten detektierten Teilchen detektiert wird.

3. Verfahren zur Charakterisierung nach Anspruch 1 oder 2, wobei die Zerfallskette nacheinander über eine Vielzahl radioaktiver Isotope verläuft, die jeweils durch Emission eines Teilchens eines Typs α oder β mit einer Halbwertszeit zerfallen, wobei die zweite Halbwertszeit die kleinste aus der Gruppe der Halbwertszeiten der Zerfallskette ist, die größer als eine Totzeit des Detektors ist.

4. Verfahren zur Charakterisierung nach einem der vorhergehenden Ansprüche, wobei das Zeitintervall kleiner als das Zwanzigfache der zweiten Halbwertszeit ist.

5. Verfahren zur Charakterisierung nach einem der vorhergehenden Ansprüche, wobei der Schritt der Analyse der Daten ferner einen Teilschritt der Kartierung der räumlichen Koordinaten der Austrittspunkte des ersten und des zweiten detektierten Teilchens der aufgefundenen Paare in der festen Probe umfasst.

6. Verfahren zur Charakterisierung nach einem der vorhergehenden Ansprüche, wobei die Zerfallskette unmittelbar vor dem ersten radioaktiven Isotop über ein drittes radioaktives Isotop verläuft, wobei das dritte Isotop durch Emission eines dritten Teilchens eines Typs α oder β zerfällt, wobei der Schritt der Analyse der Daten einen Teilschritt der Suche nach einem dritten detektierten Teilchen für jedes aufgefundene Paar umfasst, das die folgenden Kriterien erfüllt: Detektionszeitpunkt des dritten detektierten Teilchens liegt vor dem Detektionszeitpunkt des ersten detektierten Teilchens und ist von diesem durch ein Zeitintervall getrennt, das kleiner als eine vorgegebene Tripletzeitgrenze ist; Abstand zwischen den jeweiligen Austrittspunkten des dritten detektierten Teilchens und des ersten detektierten Teilchens ist kleiner als eine vorgegebene räumliche Tripletgrenze; durch das dritte detektierte Teilchen deponierte Ladung entspricht dem Typ des dritten Teilchens, das von dem dritten Isotop bei dessen Zerfall emittiert wird.

7. Verfahren zur Charakterisierung nach einem der vorhergehenden Ansprüche, wobei die Zerfallskette ausgewählt ist aus:
- derjenigen des ²³⁵U, wobei das erste Isotop das ²¹⁹Rn ist, wobei das zweite Isotop das ²¹⁵Po ist; oder
- derjenigen des ²³⁸U, wobei das erste Isotop das ²¹⁴Bi ist, wobei das zweite Isotop das ²¹⁴Po ist; oder
- derjenigen des ²³²Th, wobei das erste Isotop das ²²⁰Rn ist, wobei das zweite Isotop das ²¹⁶Po ist; oder
- derjenigen des ²³⁷Np, wobei das erste Isotop das ²²¹Fr ist, wobei das zweite Isotop das ²¹⁷At ist.

8. Charakterisierungssystem einer festen Probe, die ein radioaktives Element enthalten kann, das gemäß einer Zerfallskette durch Emission von α- und/oder β-Teilchen zerfällt, wobei die Zerfallskette nacheinander über ein erstes radioaktives Isotop und anschließend über ein zweites radioaktives Isotop verläuft, wobei das erste Isotop durch Emission eines ersten Teilchens eines Typs α oder β mit einer ersten Halbwertszeit zerfällt, wobei das zweite Isotop durch Emission eines zweiten Teilchens eines Typs α oder β mit einer zweiten Halbwertszeit zerfällt, die kleiner als die erste Halbwertszeit ist, wobei das Charakterisierungssystem umfasst:
- ein Autoradiographiesystem (1) der festen Probe, umfassend einen Detektor (2), der dazu konfiguriert ist, von der festen Probe emittierte α- und/oder β-Teilchen zu detektieren und für jedes detektierte α- oder β-Teilchen die folgenden Daten aufzuzeichnen: Detektionszeitpunkt des Teilchens, räumliche Koordinaten eines Austrittspunkts des Teilchens, bei der Detektion durch das Teilchen deponierte Ladung;
- eine Einheit (47) zur Analyse der aufgezeichneten Daten, die dazu konfiguriert ist, das Vorhandensein des ersten und/oder des zweiten radioaktiven Isotops in der festen Probe zu identifizieren, wobei das System **dadurch gekennzeichnet ist, dass** die Datenanalyseeinheit (47) dazu konfiguriert ist:
* Paare aufzufinden, die ein erstes detektiertes Teilchen und ein zweites detektiertes Teilchen umfassen, das später als das erste detektierte Teilchen detektiert wurde, wobei das Paar die folgenden Kriterien erfüllt: jeweilige Detektionszeitpunkte des ersten detektierten Teilchens und des zweiten detektierten Teilchens durch ein Zeitintervall getrennt sind, das kleiner als eine vorgegebene Paarzeitgrenze ist; Abstand zwischen den jeweiligen Austrittspunkten des ersten detektierten Teilchens und des zweiten detektierten Teilchens kleiner als eine vorgegebene räumliche Paargrenze ist; durch das erste detektierte Teilchen deponierte Ladung dem Typ des ersten Teilchens entspricht, das von dem ersten Isotop bei dessen Zerfall emittiert wird; durch das zweite detektierte Teilchen deponierte Ladung dem Typ des zweiten Teilchens entspricht, das von dem zweiten Isotop bei dessen Zerfall emittiert wird;
* die Anzahl der aufgefundenen Paare zu zählen.

9. Charakterisierungssystem nach Anspruch 8, wobei die Datenanalyseeinheit (47) dazu konfiguriert ist, in der festen Probe die räumlichen Koordinaten der Austrittspunkte des ersten und des zweiten detektierten Teilchens der aufgefundenen Paare zu kartieren.

10. Charakterisierungssystem nach Anspruch 8 oder 9, wobei die Zerfallskette unmittelbar vor dem ersten radioaktiven Isotop über ein drittes radioaktives Isotop verläuft, wobei das dritte Isotop durch Emission eines dritten Teilchens eines Typs α oder β zerfällt, wobei die Datenanalyseeinheit (47) dazu konfiguriert ist, für jedes aufgefundene Paar nach einem dritten detektierten Teilchen zu suchen, das die folgenden Kriterien erfüllt:
- Detektionszeitpunkt des dritten detektierten Teilchens liegt vor dem Detektionszeitpunkt des ersten detektierten Teilchens und ist von diesem durch ein Zeitintervall getrennt, das kleiner als eine vorgegebene Tripletzeitgrenze ist;
- Abstand zwischen den jeweiligen Austrittspunkten des dritten detektierten Teilchens und des ersten detektierten Teilchens ist kleiner als eine vorgegebene räumliche Tripletgrenze;
- durch das dritte detektierte Teilchen deponierte Ladung entspricht dem Typ des dritten Teilchens, das von dem dritten Isotop bei dessen Zerfall emittiert wird.

## Claims

1. A characterization method of a solid sample likely to contain a radioactive element decaying through a decay chain by the emission of α and/or β particles, the decay chain passing successively through a first radioactive isotope and then a second radioactive isotope, the first isotope decaying by the emission of a first particle of type α or type β with a first half-life period, the second isotope decaying by the emission of a second particle of type α or type β with a second half-life period shorter than the first half-life period, the method comprising the following steps:
- Autoradiography of the solid sample with detection using a detector (2) of the α and/or β particles emitted by the solid sample and, for each detected α or β particle, recording the following data: the detection time of the particle, the spatial coordinates of an emergence point of the particle and the charge deposited by the particle upon detection;
- Analysis of the recorded data to detect the presence of the first and/or second radioactive isotope(s) in the solid sample, **characterized in that** the data analysis comprises the following sub-steps:
* Identifying pairs comprising a first detected particle and a second detected particle later than the first, said pair meeting the following criteria: respective detection times of the first detected particle and the second detected particle separated by a time interval that is less than a given pair's time limit; distance between the respective emergence points of the first detected particle and the second detected particle less than a given pair spatial limit; charge deposited by the first detected particle corresponding to the type of the first particle emitted by the first isotope during its decay; charge deposited by the second detected particle corresponding to the type of second particle emitted by the second isotope during its decay;
* Counting the number of identified pairs.

2. The characterization method according to Claim 1, wherein the respective detection times of the first and second detected particles of the same pair are immediately consecutive with no other particle being detected between the first and second detected particles.

3. The characterization method according to Claim 1 or Claim 2, wherein the decay chain passes successively through a plurality of radioactive isotopes, each decaying by emission of a particle of type α or type β with a half-life period, the second half-life period being the smallest of the group of half-life periods in the decay chain greater than a dead time of the detector.

4. The characterization method according to any of the preceding claims, wherein said time interval is less than 20 times the second half-life period.

5. The characterization method according to any of the preceding claims, wherein the data-analysis step further comprises a sub-step of mapping in the solid sample the spatial coordinates of the emergence points of the first and second detected particles of the identified pairs.

6. The characterization method according to any of the preceding claims, wherein the decay chain passes through a third radioactive isotope immediately before the first radioactive isotope, the third isotope decaying by emission of a third particle of type α or type β, the data-analysis step comprising a sub-step of searching, for each identified pair, for a third detected particle that meets the following criteria: detection time of the third detected particle is earlier than the detection time of the first detected particle and separated from it by a time interval that is less than a given triplet time limit; distance between the respective emergence points of the third detected particle and the first detected particle less than a given triplet spatial limit; and charge deposited by the third detected particle corresponding to the type of the third particle emitted by the third isotope during its decay.

7. The characterization method according to any of the preceding claims, wherein the decay chain is chosen from:
- That of ²¹¹U, the first isotope being ²¹⁹Rn and the second being ²¹⁵Po; or
- That of ²¹¹U, the first isotope being ²¹⁴Bi and the second being ²¹⁴Po; or
- That of ²³²Th, the first isotope being ²²⁰Rn and the second being ²¹⁶Po; or
- That of ²³⁷Np, the first isotope being ²²¹Fr and the second being ²¹⁷At.

8. A characterization set of a solid sample likely to contain a radioactive element decaying through a decay chain by the emission of α and/or β particles, the decay chain passing successively through a first radioactive isotope and then a second radioactive isotope, the first isotope decaying by the emission of a first particle of type α or type β with a first half-life period, the second isotope decaying by the emission of a second particle of type α or type β with a second half-life period shorter than the first half-life period, the characterization set comprising:
- An autoradiography system (1) of the solid sample comprising a detector (2) configured to detect the α and/or β particles emitted by the solid sample, and, for each detected α or β particle, record the following data: detection time of the particle, spatial coordinates of an emergence point of the particle and charge deposited by the particle upon detection;
- A unit (47) for analyzing the recorded data, being configured to identify the presence of the first and/or second radioactive isotope(s) in the solid sample, the set being **characterized in that** the data analysis unit (47) being configured to:
* Identify the pairs that comprise a first detected particle and a second detected particle detected later than the first, said pair meeting the following criteria: respective detection times of the first detected particle and the second detected particle separated by a time interval that is less than a given pair's time limit; distance between the respective emergence points of the first detected particle and the second detected particle less than a given pair spatial limit; charge deposited by the first detected particle corresponding to the type of the first particle emitted by the first isotope during its decay; charge deposited by the second detected particle corresponding to the type of second particle emitted by the second isotope during its decay;
* Counting the number of identified pairs.

9. The characterization set according to Claim 8, wherein the data analysis unit (47) is configured to map, in the solid sample, the spatial coordinates of the emergence points of the first and second detected particles of the identified pairs.

10. The characterization set according to Claim 8 or Claim 9, wherein the decay chain passes through a third radioactive isotope immediately before the first radioactive isotope, the third isotope decaying by the emission of a third particle of type α or type β, the data analysis unit (47) being configured to search, for each identified pair, for a third detected particle that meets the following criteria:
- detection time of the third detected particle earlier than the detection time of the first detected particle and separated from it by a time interval that is less than a given triplet time limit;
- distance between the respective emergence points of the third detected particle and the first detected particle less than a given triplet spatial limit;
- charge deposited by the third detected particle corresponding to the type of the third particle emitted by the third isotope during its decay.
